Europäisches Patentamt

European Patent Office

Office européen des brevets

(11) Veröffentlichungsnummer: **0 177 709**
A1

# EUROPÄISCHE PATENTANMELDUNG

(21) Anmeldenummer: **85110063.6**

(22) Anmeldetag: **10.08.85**

(51) Int. Cl.⁴: **F 16 B 43/00,** F 16 B 39/24,
F 16 J 15/12

(30) Priorität: **12.09.84 DE 3433375**

(43) Veröffentlichungstag der Anmeldung: **16.04.86**
**Patentblatt 86/16**

(84) Benannte Vertragsstaaten: **AT CH DE FR GB IT LI SE**

(71) Anmelder: **KSA Dichtsysteme GmbH & Co. KG,
Steinbeisstrasse 46, D-7143 Vaihingen an der Enz (DE)**

(72) Erfinder: **Abele, Berthold Wilhelm, Am Schalkstein 21,
D-7121 Walheim (DE)**

(74) Vertreter: **Jackisch, Walter, Dipl.-Ing., Menzelstrasse 40,
D-7000 Stuttgart 1 (DE)**

(54) **Dicht- und Sicherungseinrichtung.**

(57) Es wird eine Dicht- und Sicherungseinrichtung mit einer Sicherungsscheibe (3 bis 3''') und einem elastischen Dichtring (2 bis 2''') vorgeschlagen, die auf einen Schaft einer Kopfschraube aufschiebbar sind. Die Sicherungsscheibe weist an mindestens einer Stirnseite eine aus Erhöhungen und Vertiefungen gebildete Rasterung (11, 12) auf. Der Elastomerdichtring (2' bis 2''') besitzt einen dem Kopf der Schraube zugewandten und einen dem Kopf abgewandten Dichtungsteil (19, 20). Der Elastomerdichtring (2' bis 2''') ist mit der Sicherungsscheibe (3' bis 3''') in ein und derselben Ebene angeordnet und mit seinem der Rasterung (11, 12) naheliegenden Außenumfang am Innenumfang (17) der Sicherungsscheibe befestigt. Die Ebene der Rasterung der Sicherungsscheibe ist gegenüber dem Dichtungsteil des Elastomerdichtringes zurückgesetzt.

Patentanwalt
Dipl.-Ing. W. Jackisch
Menzelstr. 40, 7000 Stuttgart 1

- 2 -

KSA Dichtsysteme
GmbH & Co. KG
Steinbeisstr. 46
7143 Vaihingen a.d.Enz

A 1-86 750/soa
07.08.1985

Dicht- und Sicherungseinrichtung
========================================

Die Erfindung betrifft eine Dicht- und Sicherungseinrichtung mit den Merkmalen des Oberbegriffs des
Anspruchs 1.

Bekannte Schraubverbindungen, mit denen beispielsweise Maschinenteile, wie Gehäuseteile oder dergleichen, verbunden werden, müssen oftmals gegen
ein Ausdringen von Gasen oder Flüssigkeiten abgedichtet werden. Hierzu sind Schraubendichtungen bekannt, die aus einem elastischen Werkstoff bestehen,
der sich beim Anziehen der Schraubverbindung verformt und sich an der Planfläche des Schraubenkopfes
und gegenüberliegend an der parallelen Gegenfläche
des zu verbindenden Maschinenteiles dichtend anlegt und somit eine Dichtung gegen Austreten von
Gasen, Flüssigkeiten usw. bildet. Bei diesen bekannten Dichtungen wird also ein Dichtungsring, der
zum Beispiel als im Querschnitt kreisringförmiger
O-Ring ausgeführt sein kann, durch Anpressen des
Schraubenkopfes gegen die zu verschraubende Fläche
gedrückt. Dazu ist es bekannt, Schraubenverbindungen gegen ein unbeabsichtigtes Lösen zu sichern. Hierzu
dienen Sicherungsscheiben, die eine Rasterung, wie
Zacken, Kerben oder dergleichen aufweisen. Solche
Sicherungsscheiben, die ebenfalls auf den Schraubenschaft aufgeschoben werden, werden beim Anziehen
des Schraubenkopfes zusammengedrückt und dabei so
weit verformt, daß eine feste mechanische Verbindung
zwischen dem Kopf der Schraube und der Gegenfläche
entsteht.

Die Schraubverbindungen waren dafür zumeist so ausgebildet, daß unterhalb der Sicherungsscheibe im
Körper des anzuziehenden Maschinenteiles eine Nut
eingestochen war, in die ein zur Abdichtung erforderlicher O-Ring eingelegt wurde. Die Herstellung
dieser bekannten Abdichtungs- und Sicherungselemente
bei Schraubverbindungen ist außerordentlich aufwendig,
da das Einbringen der Dichtringe in einem besonderen,
relativ umständlichen, zeitaufwendigen und somit
teueren Arbeitsvorgang vorgenommen werden muß. Außerdem besteht der funktionelle Nachteil, daß das Einlegen der getrennten Elemente, nämlich der Sicherungsscheibe und des Dichtringes, insbesondere wenn der
Dichtring in eine Nut einzulegen ist, bei der Montage, insbesondere bei Reparaturfällen, vergessen
werden kann, so daß die unbedingt notwendige Dichtfunktion nicht gewährleistet ist.

Die Aufgabe der Erfindung besteht darin, eine Dicht-
und Sicherungseinrichtung mit den Merkmalen des Oberbegriffs des Anspruchs 1 dahingehend weiterzubilden,
daß mit einfachen Mitteln ein baueinheitlich als Massenartikel kostengünstig herstellbares Dichtsicherungselement erzielt wird, das unter Einsparung
zusätzlicher Dichtringaufnahmenuten einfach zu montieren ist.

Diese Aufgabe wird erfindungsgemäß durch die kennzeichnenden Merkmale des Anspruchs 1 gelöst.

Bevorzugte Ausgestaltungen und Weiterbildungen sowie
weitere Vorteile und wesentliche Einzelheiten der
Erfindung sind den Merkmalen der Unteransprüche,
der nachfolgenden Beschreibung und der Zeichnung
zu entnehmen, die in schematischer Darstellung bevorzugte Ausführungsformen als Beispiel zeigt. Es
stellen dar:

FIG. 1 eine Draufsicht auf eine erfindungsgemäße
Dichtsicherungsscheibe,

FIG. 2 eine geschnittene Seitenansicht der Dichtsicherungsscheibe gemäß dem Schnitt II-II

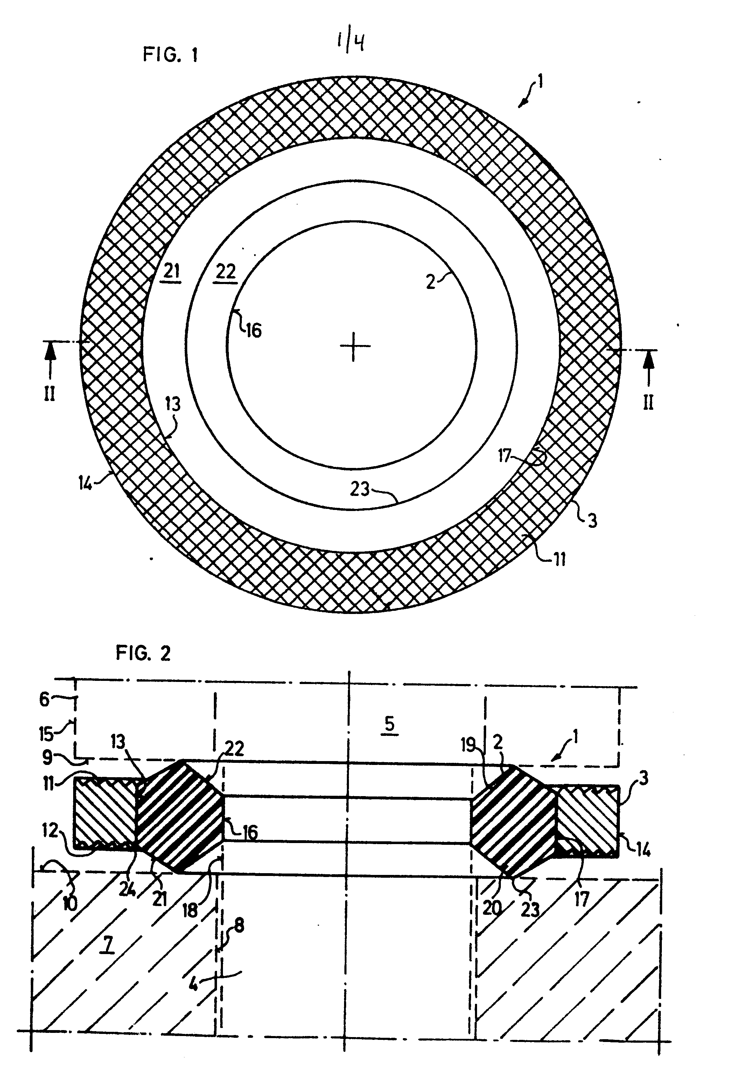

der FIG. 1 mit einem gestrichelt angedeuteten
Unterteil, in das eine ebenfalls gestrichelt
dargestellte Schraube, welche die Dichtsicherungsscheibe durchsetzt, eingebracht ist,

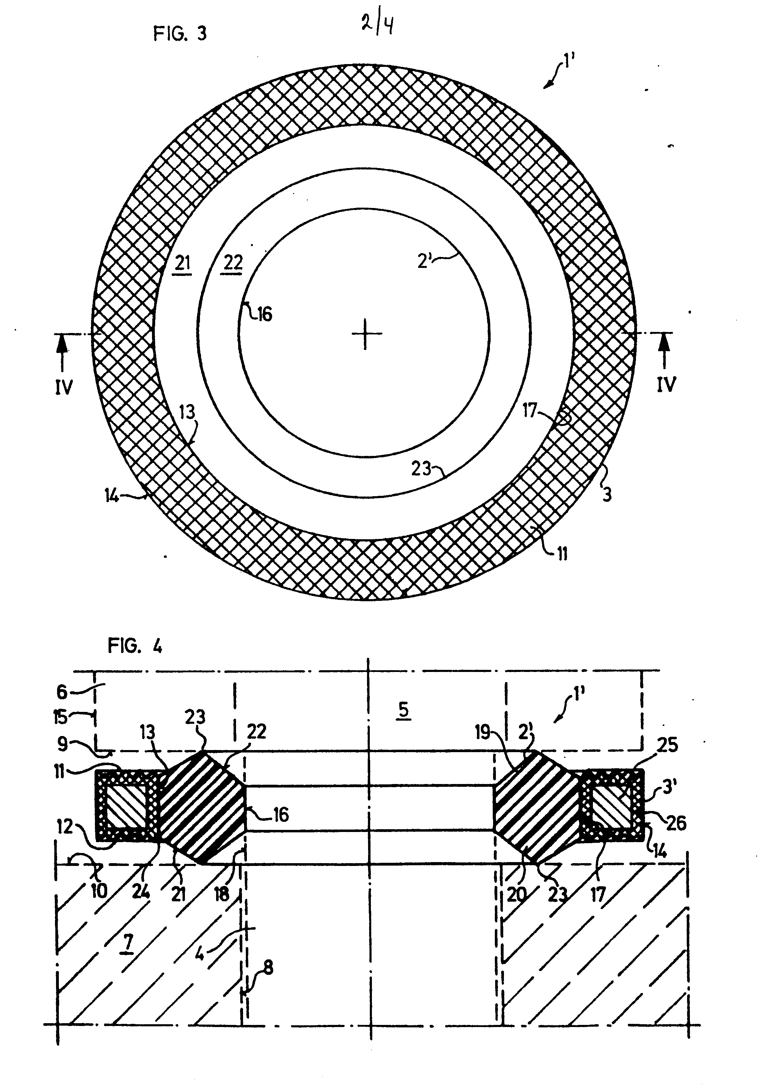

FIG. 3 eine Draufsicht auf eine zweite Ausführungsform einer erfindungsgemäßen Dichtsicherungsscheibe ähnlich der FIG. 1,

FIG. 4 eine geschnittene Seitenansicht der Dichtsicherungsscheibe gemäß dem Schnitt IV-IV
der FIG. 3,

- 4 -

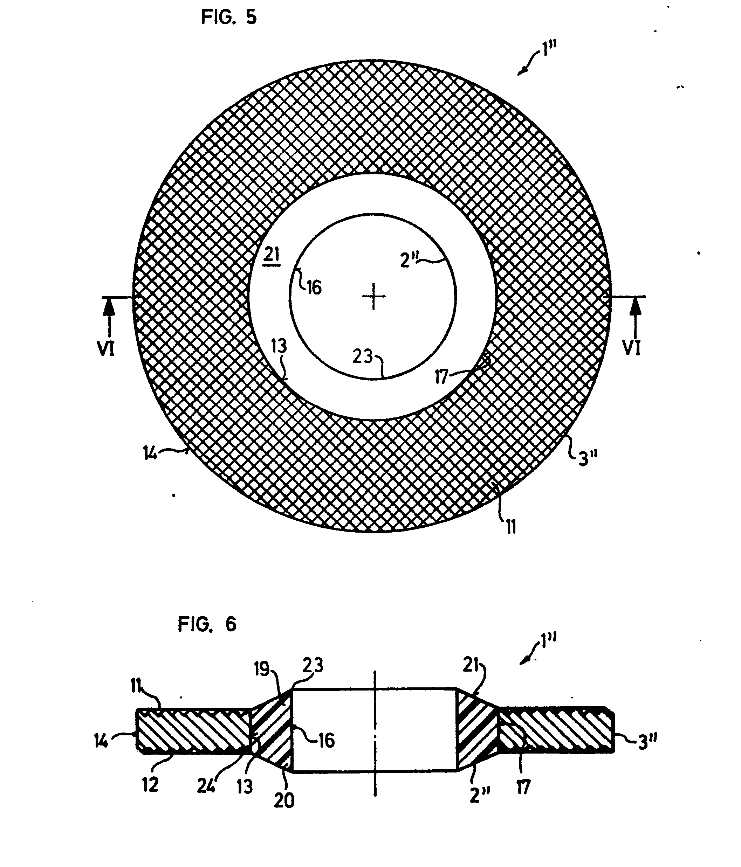

FIG. 5 eine Draufsicht auf eine dritte Ausführungsform einer erfindungsgemäßen Dichtsicherungsscheibe,

FIG. 6 eine geschnittene Seitenansicht der Dichtsicherungsscheibe gemäß dem Schnitt VI-VI
der FIG. 5,

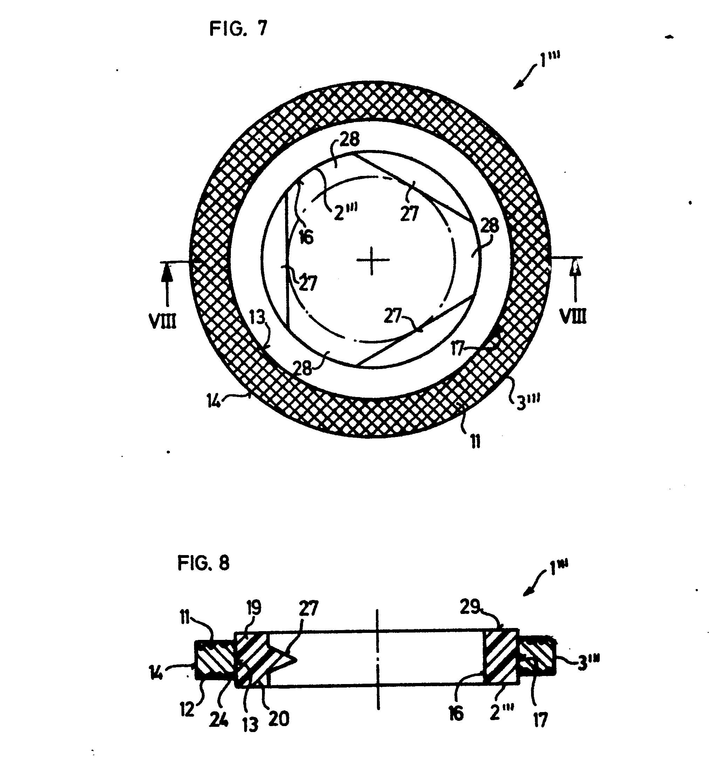

FIG. 7 eine Draufsicht auf eine vierte Ausführungsform einer erfindungsgemäßen Dichtsicherungsscheibe und

FIG. 8 eine geschnittene Seitenansicht der Dichtsicherungsscheibe gemäß dem Schnitt VIII-
VIII der FIG. 7.

Die in der Zeichnung dargestellte Dichtsicherungsscheibe 1 weist einen inneren Dichtring 2 auf, der
von einer Sicherungsscheibe 3 umschlossen ist. Die
Dichtsicherungsscheibe 1 ist auf den Schaft 4 einer
Schraube 5 aufgeschoben, die einen Kopf 6 besitzt.
Gegenüber dem Kopf 6 befindet sich ein Unterteil 7,
in dessen Bohrung 8 der Schaft 4 der Schraube 5 eingesetzt ist. Der Schaft 4 kann mit einem hier nicht
dargestellten Gewindeende in ein entsprechendes Gewinde des Unterteiles 7 eingeschraubt sein. Es ist
jedoch auch möglich, die Schraube 5 mit einer hier
nicht dargestellten Gewindemutter in axialer Richtung gegen den Unterteil 7 zu verspannen.

Bei dem in der FIG. 2 dargestellten Ausführungsbeispiel ist die Schraube 5 gerade so weit gegen den
Unterteil 7 verspannt, daß der Abstand zwischen der Dichtfläche 9 des Kopfes 6 und der Oberfläche 10
des Unterteils 7 gleich der Dicke des Dichtringes
2 in axialer Richtung ist. Der Dichtring 2 befindet
sich hier somit in einem unbelastetem Zustand. Wird
die Schraube 5 durch weiteres Anziehen axial in
Richtung gegen den Unterteil 7 verspannt, so verringert sich der Abstand zwischen der Dichtfläche
9 und der Oberfläche 10, wobei der elastische Dichtring 2 zusammengedrückt wird.

Die Sicherungsscheibe 3 besitzt eine der Dichtfläche
9 zugewandte obere Rasterung 11 und gegenüberliegend
eine der Oberfläche 10 zugewandte parallele Rasterung 12. Außerdem weist die Sicherungsscheibe 3
einen kreisrunden Innenumfang 13 und eine ebenfalls
kreisrunde Außenwand 14 auf. Beim vorliegenden Ausführungsbeispiel sind die Rasterungen 11,12 und der
Innenumfang 13 sowie die Außenwand 14 im wesentlichen
gleich lang und rechtwinklig ausgeführt, so daß die
Sicherungsscheibe 3 einen weitgehend quadratischen
Querschnitt besitzt.

Die Sicherungsscheibe 3 ist in ihrem Durchmesser
so bemessen, daß die äußere Umfangsfläche 14 in
derselben Ebene sich befindet wie die äußere Umfangsseite 15 des Kopfes 6 der Schraube 5. Die Sicherungsscheibe 3 kann vorteilhaft aus einem metallischen
Werkstoff, zum Beispiel aus Stahl, bevorzugt aus
nichtrostendem Edelstahl, hergestellt sein. Es kann
jedoch auch zweckmäßig sein, die Sicherungsscheibe
3 aus einem Nichteisenmetall, zum Beispiel aus Aluminium oder Messing, herzustellen. Darüber hinaus kann es für eine besonders kostengünstige Herstellung zweckmäßig sein, die Sicherungsscheibe 3 aus einem festen Kunststoffmaterial, zum Beispiel Polyamid oder dergleichen, anzufertigen, das auch mit Glasfasern verstärkt oder mit anderweitigen Füllstoffen, wie zum Beispiel Quarzsand, Aluminiumoxid, Tonerdehydrat, angereichert sein kann. Wichtig ist, daß die Sicherungsscheibe 3 eine verhältnismäßig hohe Druckfestigkeit aufweist, so daß beim Anziehen der Schraube 5 eine einwandfreie Sicherungsanlage und Abstandshaltung zum Unterteil 7 hin gewährleistet ist, indem die Dichtfläche 9 des Kopfes 6 an der Rasterung 11 der Sicherungsscheibe 3 und die Oberfläche 10 des Unterteils 7 an der unteren Rasterung 12 der Sicherungsscheibe 3 fest und reibschlüssig anliegen, so daß ein unbeabsichtigtes Lösen beziehungsweise Lockern der Schraube 5 nicht auftreten kann, sondern eine einwandfreie Schraubensicherung auch bei Vibrationen und Schwingungsbeanspruchungen gegeben und gleichzeitig eine einwandfreie Abdichtung über den Dichtring 2 gewährleistet ist.

Der elastische Dichtring 2 besteht bevorzugt aus einem gummiartigen Elastomerwerkstoff. Die Härte des Elastomerwerkstoffes beträgt vorzugsweise etwa 40 bis 90 Shore A. Der Dichtring 2 ist somit zur Erfüllung seiner Dichtfunktion zwischen der Schraube 5 und dem Unterteil 7 erheblich weicher als die Sicherungsscheibe 3, die eine wesentlich größere Härte beziehungsweise Druckfestigkeit besitzt, um auch größeren Anzugsmomenten der Schraube 5 für eine einwandfreie Abstandshaltung und Sicherung gegen ein unbeabsichtiges Lösen zwischen der Dichtfläche 9 und der Oberfläche 10 zu widerstehen.

Der Dichtring 2 weist eine kreisringförmige Innenwand 16 und einen ebenfalls kreisringförmigen Außenumfang 17 auf. Der Durchmesser des elastischen Dichtringes 2 ist im Bereich der Innenwand 16 so bemessen,
daß diese die Umfangsfläche 18 des Schaftes 4 eng
umschließt. Die Dichtsicherungsscheibe 1 ist damit
durch Selbsthaltung unverlierbar am Schaft 4 der
Schraube 5 gelagert. Gleichzeitig ist dadurch stets
eine einwandfreie Selbstzentrierung der Dichtsicherungsscheibe 1 gegeben, so daß bei der Montage keine
zusätzlichen Manipulationen zur Ausrichtung beziehungsweise Zentrierung der Dichtsicherungsscheibe 1 erforderlich sind.

Der Durchmesser des Außenumfangs 17 des Dichtringes
2 ist so bemessen, daß er im wesentlichen gleich dem
Durchmesser im bereich des Innenumfangs 13 der
Sicherungsscheibe 3 ist. Der Elastomerdichtring 2
ist mit der Sicherungsscheibe 3 erfindungsgemäß
fest verbunden (angebunden). Diese Befestigung beziehungsweise Anbindung des Dichtringes 2 an der
Sicherungsscheibe 3 kann vorteilhaft durch eine
mechanische Oberflächenaufrauhung oder chemische
Oberflächenanlösung mittels Lösungsmittel oder Säurebehandlung des Außenumfangs 17 des Elastomerdichtrings 2 und/oder des Innenumfangs 13 der Sicherungsscheibe 3 mitgebildet beziehungsweise verstärkt sein.
Es kann auch günstig sein, den Dichtring 2 und die
Sicherungsscheibe 3 mittels eines zusätzlichen, vorzugsweise dünnflüssigen Klebstoffs miteinander zu
verbinden. Für hochwertige Anwendungen kann dazu
zum Beispiel Epoxidharzkleber verwendet werden,
dessen Dauertemperaturbeständigkeit über 150°C beträgt.

Der elastische Dichtring 2, der im eingebauten Zustand innen von der Umfangsfläche 18 des Schaftes
4 und außen vom Innenumfang 13 der Sicherungsscheibe
3 radial absolut sicher abgestützt ist, weist stirnseitig einander gegenüberliegende Dichtungsteile 19,
20 auf, die im Querschnitt etwa dreieckförmig gestaltet sind und je zwei Schrägflächen 21,22 besitzen. Die beiden Schrägflächen 21,22 sind in einem
Winkel von etwa 90° zueinander angeordnet. Die Winkelspitze im Stoßbereich der beiden Schrägflächen
21,22 ist hier als Dichtlippe 23 ausgebildet, die
somit als Kreislinie den Schaft 4 der Schraube 5
auf Abstand umringt und an der Dichtfläche 9 des
Kopfes 6 sowie gegenüberliegend an der Oberfläche
10 des Unterteils 7 dichtend anliegt.

Die Schrägfläche 21, die von der Dichtlippe 23 in
Richtung nach außen zur Sicherungsscheibe 3 hin
abfällt, ist so ausgerichtet, daß sie an den von
der Rasterung 11,12 und von dem Innenumfang 13 der
Sicherungsscheibe 3 gebildeten Eckteil 24 angrenzt.
Die von der Dichtlippe 23 nach innen abfallende
Schrägfläche 23 ist etwas länger als die äußere
Schrägfläche 21 ausgeführt, so daß hier in axialer
Richtung die Innenwand 16 des Dichtringes 2 etwas
kürzer ist als der Außenumfang 17.

Außerdem ist der FIG. 2 zu entnehmen, daß beim vorliegenden Ausführungsbeispiel die Breite des Dichtringes 2 zwischen der Innenwand 16 und dem Außenumfang 17 in etwa gleich der Breite der Sicherungsscheibe 3 zwischen dem Innenumfang 13 und der Außenwand 14 ist. Im Bereich der kreislinienförmigen Dichtlippe 23 ist der Elastomerdichtring 2 so ausgeführt, daß der Durchmesser etwa um die Hälfte der
Breite des Dichtringes 2 zwischen dessen Innenwand
16 und Außenumfang 17 größer ist als der Durchmesser
im Bereich der Innenwand 16.

Die Rasterung 11,12 der Sicherungsscheibe 3 grenzt
unmittelbar    an die Verbindungsstelle am Außenumfang 17 des Elastomerdichtringes 2 an. Die Rasterung 11,12, die gegenüber dem Dichtungsteil 19,20
zurückgesetzt ist, so daß der Dichtungsteil 19,20
des Dichtringes 2 die Ebene der Sicherungsscheibe
3 überragt, weist Erhöhungen und Vertiefungen auf,
die als radiale Riefen, kreisring- oder spiralförmige Rillen oder auch als Oberflächenrändelung
oder dergleichen ausgebildet sein können. Bei einer
aus Metall bestehenden Sicherungsscheibe 3 kann die
Rasterung 11,12 zum Beispiel durch Prägen oder
Pressen hergestellt werden, während bei einer aus
Kunststoff hergestellten Sicherungsscheibe 3 die
Rasterung 11,12 gleich während des Formspritzens
oder Formgießens durch entsprechende Werkzeugformgestaltung angefertigt werden kann.

Bei dem in den FIG. 3 und 4 dargestellten Ausführungsbeispiel ist die Dichtsicherungsscheibe 1' im wesentlichen wie die zuvor beschriebene Dichtsicherungsscheibe 1 der FIG. 1 und 2 ausgeführt, jedoch besteht die Sicherungsscheibe 3' aus einer inneren
Metallplatine 25, die hier mit einer Kunststoffschicht 26
allseits umhüllt ist. Die Rasterung 11,12 ist bei
dieser Ausführungsform unmittelbar in der Kunststoffschicht 26 ausgebildet. Der Elastomerdichtring 2' ist mit seinem Außenumfang 17 am Innenumfang 13 der Sicherungsscheibe 3' unmittelbar mit der Kunststoffschicht 26 verbunden. Die Verbindung des Dichtringes 2' mit der Sicherungsscheibe 3' kann bevorzugt als Vulkanisation ausgeführt sein, so daß ein äußerst inniger und fester Verbund gegeben ist. Die Kunststoffschicht 26 kann zum Beispiel aus Polyamid bestehen. Bei dem eingangs beschriebenen Ausführungsbeispiel der FIG. 1 und 2 ist es auch möglich, den Dichtring 2 mit der Sicherungsscheibe 3 unmittelbar durch Vulkanisation zu verbinden, wenn die Sicherungsscheibe 3 aus Kunststoff hergestellt ist.

Das in den FIG. 5 und 6 dargestellte Ausführungsbeispiel ist in etwa wie das eingangs beschriebene Ausführungsbeispiel der FIG. 1 und 2 ausgeführt, doch ist bei dieser Dichtsicherungsscheibe 1'' der Elastomerdichtring 2'' im Querschnitt etwa trapezförmig ausgebildet. Die Innenwand 16'' ist länger als die Dicke der Sicherungsscheibe 3'' zwischen den an beiden Stirnseiten ausgebildeten Rasterungen 11,12. Die Dichtlippe 23 wird hierbei somit durch den Winkeleckbereich der Innenwand 16 und der nach außen abfallenden Schrägfläche 21 gebildet. Der Durchmesser des Elastomerdichtringes 2'' ist beim vorliegenden Ausführungsbeispiel im Bereich der kreislinienförmigen Dichtlippe 23 gleich dem Durchmesser im Bereich der Innenwand 16. Die Breite zwischen der Außenwand 14 und dem Innenumfang 13 der Sicherungsscheibe 3'' ist hier etwa 2 1/2 mal größer als die Breite des Elastomerdichtringes 2'' zwischen dem Außenumfang 17 und der Innenwand 16.

Bei dem in den FIG. 7 und 8 dargestellten Ausführungsbeispiel weist der Elastomerdichtring 2''' der Dichtsicherungsscheibe 1'''an der Innenwand 16 Zentrierlippen 27 auf, die radial in Richtung zur Mittenachse gerichtet sind. Hierbei sind insgesamt drei
Zentrierlippen 27 ausgebildet, die in gleichmäßigen
Teilkreisabständen in einem Winkel von 120° zueinander an der Innenwand 16 ausgebildet sind. Zwischen je zwei Zentrierlippen 27 der Innenwand 16
ist in den 120°-Winkeleckbereichen des Elastomerdichtringes 1''' je eine Teilkreisausnehmung 28
ausgebildet. Wenn die Dichtsicherungsscheibe 1'''
auf den Schaft 4 einer Schraube 5 aufgeschoben wird,
grenzen die Zentrierlippen 27 mit ihrem Längsmittenbereich tangential an die Umfangsfläche 18 des Schaftes
4 an, so daß die Dichtsicherungsscheibe 1''' praktisch
in Form einer Dreipunktzentrierung am Schaft 4 ausgerichtet und gehalten ist. Die FIG. 8 zeigt zudem,
daß der Dichtungsteil 19,20 des die Zentrierlippen
27 aufweisenden Elastomerdichtringes 2''' eine Plandichtfläche 29 besitzt. Diese Plandichtfläche 29
liegt höhenversetzt parallel zur Ebene der Rasterung
11,12 der Sicherungsscheibe 3'''.

Die erfindungsgemäßen Dichtsicherungsscheiben 1 bis
1''' können bevorzugt sowohl bei Vakuum- als auch bei
Drucksystemen angewandt werden, da die Schraube 5
mit großer Kraft fest angezogen werden kann, wobei
der Kraftfluß über die Sicherungsscheibe 3 bis 3'''
zwischen dem Kopf 6 und dem Unterteil 7 aufgenommen
wird. Ein Nachziehen der Schraube 5 ist deshalb
nicht erforderlich. Die Dichtsicherungsscheibe 1 bis 1''' kann für eine kostengünstige Massenproduktion aufgrund ihrer Gestaltung über entsprechende
Zuführeinrichtungen vollautomatisch auf die Schraube
5 aufgeschoben werden. Es können weitgehend handelsübliche Schrauben eingesetzt werden und es sind
keine zusätzlichen maschinellen Dichtflächenbearbeitungen, zum Beispiel für die Einbringung einer
Aufnahmenut oder dergleichen, erforderlich. Im montierten Zustand kann nachträglich von außen ohne
weiteres kontrolliert werden, ob die Dichtsicherungsscheibe 1 bis 1''' nicht vergessen worden ist.

Ein wesentlicher Vorteil besteht darin, daß die
Schraubenabdichtung und Schraubensicherung durch
ein einziges baueinheitliches Element erreicht wird,
so daß bei der Herstellung einer Schraubensicherung
eine erhebliche Vereinfachung sowohl bei der Montage
als auch bei der Lagerhaltung usw. erzielt wird.
Darüber hinaus sind Fehler bei der Montage vermieden,
weil nunmehr nur noch ein einziges Bauteil einzusetzen ist.

Ein weiterer wesentlicher Vorteil besteht darin,
daß die Dichtsicherungsscheibe 1 bis 1''' bei lösbaren Schraubenverbindungen uneingeschränkt verwendet werden kann. Im Gegensatz zu anderen Schraubensicherungen, die beispielsweise auf chemischem
Wege eine absolute Formschlußverbindung zwischen
dem Schraubenkopf und dem zu verbindenden Maschinenteil herstellen, braucht diese Sicherung bei einer
Demontage nicht zerstört zu werden. Sofern die
Sicherungsscheibe 3 bis 3''' aus Kunststoff besteht
oder aus einer Metallplatine 25 mit einer Kunststoffschicht 26 und aus Kunststoff bestehender Rasterung 11,12 hergestellt ist, ist der weitere Vorteil
gegeben, daß auch Schraubenverbindungen abgedichtet
und zugleich gesichert werden können, die keinen so
hohen Anpreßdruck erfordern, weil die erwünschte
Sicherungsverzahnung zwischen dem Schraubenkopf und
der Gegenfläche bei entsprechendem Kunststoffmaterial
auch schon bei einem verhältnismäßig niedrigen Anpreßdruck infolge des geringen Verformungswiderstandes erreicht wird.

Eine Beschichtung der Metallplatine 25 mit der Kunststoffschicht 26 hat wiederum den Vorteil einer einfacheren Herstellung, weil die erfindungsgemäß ausgebildete Rasterung 11,12 unmittelbar in der Kunststoffschicht 26 sofort bei deren Herstellung ohne
zusätzlichen Arbeitsgang angefertigt werden kann.

Ein weiterer wesentlicher Vorteil der erfindungsgemäßen Dichtsicherungsscheibe 1 bis 1''' besteht
darin, daß bei Verwendung eines einzigen Bauteils
als Sicherungsteil und Abdichtteil gegenüber bekannten vergleichbaren Lösungen erheblich an Bauhöhe insgesamt eingespart wird, da die erfindungsgemäße Anordnung der Rasterung 11,12 an der Oberfläche im Vergleich zum Einbringen einer beispielsweise getrennten Einstechnut mit eingelegtem O-
Ring nur eine sehr geringe Bauhöhe erfordert.

Patentanwalt
Dipl.-Ing. W. Jackisch
Menzelstr. 40, 7000 Stuttgart 1

KSA Dichtsysteme

GmbH & Co.KG

Steinbeisstr. 46

7143 Vaihingen a.d.Enz

A 1-86 750/soa
07.08.1985

Dicht- und Sicherungseinrichtung
================================

__Ansprüche__

1. Dicht- und Sicherungseinrichtung für eine Kopfschraube mit einer Sicherungsscheibe und einem
elastischen Dichtring, die auf einen Schaft der
Schraube aufschiebbar sind, mit einer an mindestens
einer Stirnseite der Sicherungsscheibe vorgesehenen,
Erhöhungen und Vertiefungen aufweisenden Rasterung
und mit einem dem Kopf der Schraube zugewandten
sowie einem dem Kopf abgewandten Dichtungsteil des
Dichtrings, dadurch gekennzeichnet, daß der elastische Dichtring (2 bis 2''') mit der Sicherungsscheibe
(3 bis 3''') in ein und derselben Ebene angeordnet
und mit seinem der Rasterung (11,12) naheliegenden
Außenumfang (17) am Innenumfang (13) der Sicherungsscheibe (3 bis 3''') angebunden ist und daß die
Rasterung (11,12) der Sicherungsscheibe (3 bis 3''')
gegenüber dem Dichtungsteil (19,20) derart zurückgesetzt ist, daß dieser die Erhöhungen der Rasterung
(11,12) überragt.

0177709

2. Dicht- und Sicherungseinrichtung nach Anspruch 1,
dadurch gekennzeichnet, daß der am Innenumfang
(13) der Sicherungsscheibe (3 bis 3''') angebundene Dichtring (2 bis 2''') aus einem gummiartigen Elastomerwerkstoff mit einer Härte von etwa
4C bis 90 Shore A besteht,während die mit dem Elastomerdichtring (2,2'',2''') verbundene Sicherungsscheibe (3,3'',3''') mit der Rasterung (11,12) aus
einem Metallwerkstoff, vorzugsweise einem Nichteisenmetall, wie zum Beispiel Aluminiumlegierung,
besteht.

3. Dicht- und Sicherungseinrichtung nach Anspruch 1,
dadurch gekennzeichnet, daß die mit dem Elastomerdichtring (2,2'',2''') verbundene Sicherungsscheibe
(3,3'',3''') mit der Rasterung (11,12) aus Kunststoff, insbesondere Polyamid, besteht.

4. Dicht- und Sicherungseinrichtung nach Anspruch 1,
dadurch gekennzeichnet, daß die mit dem Elastomerdichtring (2') verbundene Sicherungsscheibe (3')
aus einer Metallplatine (25) mit einer an mindestens
einer Seite angeordneten Kunststoffschicht (26) besteht, an der die Rasterung (11,12) ausgebildet ist.

5. Dicht- und Sicherungseinrichtung nach einem der
Ansprüche 1 bis 4,
dadurch gekennzeichnet, daß die Anbindung des
Elastomerdichtringes (2 bis 2''') an der Sicherungsscheibe (3 bis 3''') durch eine mechanische Oberflächenaufrauhung oder chemische Oberflächenanlösung des
Außenumfanges (17) des Elastomerdichtrings (2 bis
2''') und/oder des Innenumfanges (13) der Sicherungsscheibe (3 bis 3''') mitgebildet ist, wobei vorzugsweise der Elastomerdichtring (2 bis 2''') am Kunststoff der Sicherungsscheibe (3 bis 3''') bevorzugt anvulkanisiert ist.

6. Dicht- und Sicherungseinrichtung nach einem der
Ansprüche 1 bis 5,
dadurch gekennzeichnet, daß die Rasterung (11,12)
mit den Erhöhungen und Vertiefungen in der Sicherungsscheibe (3 bis 3''') als radiale Riefen, kreisring-
oder spiralförmige Rillen beziehungsweise Oberflächenrändelung ausgebildet und durch Prägen oder Pressen
sowie durch Kunststoff-Formspritzen oder Kunststoff-
Formgießen an der Stirnseite der Sicherungsscheibe
(3 bis 3''') beziehungsweise in der Kunststoffschicht
(26) der Metallplatine (25) ausgeführt sind, wobei
vorzugsweise die Rasterung (11,12) unmittelbar an
die Verbindung am Außenumfang (17) des Elastomerdichtringes (2 bis 2''') angrenzt.

7. Dicht- und Sicherungseinrichtung nach einem der
Ansprüche 1 bis 6,
dadurch gekennzeichnet, daß der mit der Sicherungsscheibe (3 bis 3''') verbundene Elastomerdichtring
(2 bis 2''') mit einer Innenwand (16) den Schaft
(4) der Schraube (5) an seiner Umfangsfläche (18)
eng umschließt und zwischen dieser und dem Innenumfang (13) der Sicherungsscheibe (3 bis 3''') innen
und außen radial gestützt ist.

8. Dicht- und Sicherungseinrichtung nach einem der
Ansprüche 1 bis 7,
dadurch gekennzeichnet, daß der die Rasterung (11,12)
der Sicherungsscheibe (3,3',3'') überragende Dichtungsteil (19,20) des Elastomerdichtringes (2,2',2'') im
Querschnitt etwa dreieckförmig ausgebildet ist und eine kreislinienförmige Dichtlippe (23) mit
einer zur Rasterung (11,12) hingeneigten Schrägfläche (21)
aufweist, wobei vorzugsweise die kreislinienförmige Dichtlippe (23) im
Stoßbereich zweier etwa in einem 90° Winkel zueinander angeordneter Schrägflächen (21,22) ausgebildet
ist.

9. Dicht- und Sicherungseinrichtung nach einem der
Ansprüche 1 bis 8,
dadurch gekennzeichnet, daß der Durchmesser des
Elastomerdichtringes (2,2',2'') im Bereich der kreislinienförmigen Dichtlippe (23) etwa um die Hälfte
der Breite des Elastomerdichtringes (2,2',2'') zwischen
dessen Innenwand (16) und dem Innenumfang (13) der
Sicherungsscheibe (3,3',3'') kleiner ist als im Bereich des Außenumfanges (17) und daß die Breite des
Elastomerdichtrings (2,2') zwischen der Innenwand
(16) und dem Außenumfang (17) etwa gleich der Breite
der Sicherungsscheibe (3,3') zwischen dem Innenumfang
(13) und der Außenwand (14) ist.

10. Dicht- und Sicherungseinrichtung nach einem der Ansprüche
1 bis 9,
dadurch gekennzeichnet, daß in axialer Richtung die
Innenwand (16) des Elastomerdichtringes (2,2') kürzer
als die Dicke der im Querschnitt rechteckigen, vorzugsweise quadratischen Sicherungsscheibe (3,3') zwischen
den an beiden Stirnseiten ausgebildeten Rasterungen
(11,12) ist, und daß der Durchmesser des Elastomerdichtringes (2'') im Bereich der kreislinienförmigen
Dichtlippe (23) gleich dem Durchmesser der Innenwand
(16) ist (Fig. 5 und 6).

11. Dicht- und Sicherungseinrichtung nach einem der Ansprüche 1 bis 8 und 10,
dadurch gekennzeichnet, daß der Elastomerdichtring (2'') im Querschnitt etwa trapezförmig ist und daß in
axialer Richtung die Innenwand (16) länger als die
Dicke der Sicherungsscheibe (3'') zwischen den an
beiden Stirnseien befindlichen Rasterungen (11,12)
ist (Fig. 5 und 6).

12. Dicht- und Sicherungseinrichtung nach einem der
Ansprüche 1 bis 8, 10 und 11,
dadurch gekennzeichnet, daß die Breite der Sicherungsscheibe (3'') mit der Rasterung (11,12) zwischen der
Außenwand (14) und dem Innenumfang (13) größer, bevorzugt zwei bis vier mal größer als die Breite des
Elastomerdichtringes (2'') zwischen dem Außenumfang
(17) und der Innenwand (16) ist (Fig. 5 und 6).

13. Dicht- und Sicherungseinrichtung nach einem der
Ansprüche 1 bis 12,
dadurch gekennzeichnet, daß der im Umfangsbereich der
Sicherungsscheibe (3''') angebündene Elastomerdichtring (2''') an der Innenwand (16) radial in Richtung
zur Mittenachse gerichtete Zentrierlippen (27) aufweist (Fig. 7 und 8).

14. Dicht- und Sicherungseinrichtung nach Anspruch 13,
dadurch gekennzeichnet, daß insgesamt drei im Winkel
von 120° zueinander angeordnete Zentrierlippen (27)
an der Innenwand (16) des Elastomerdichtringes (2''')
im Umfangsbereich der Sicherungsscheibe (3''') vorgesehen sind (Fig. 7 und 8), wobei in den 120°-Winkeleckbereichen zwischen je zwei Zentrierlippen (27) an
der Innenwand (16) des Elastomerdichtringes (2''')
eine Teilkreisausnehmung (28) ausgebildet ist (Fig.
7 und 8).

15. Dicht- und Sicherungseinrichtung nach einem der
Ansprüche 12 bis 14,
dadurch gekennzeichnet, daß der Dichtungsteil (19,20)

des die Zentrierlippen (27) aufweisenden Elastomerdichtringes (2''') eine Plandichtfläche (29) aufweist, die parallel zur Ebene der Rasterung (11,12) der Sicherungsscheibe (3''') höhenversetzt ausgerichtet ist (Fig. 7 und 8).

A 186 750/30
07.08.1985

1/4

FIG. 1

FIG. 2

FIG. 3

FIG. 4

A 0177709

07.08.1985

FIG. 5

FIG. 6

0177709

A 1486 750/so
07.08.1985

FIG. 7

1'''

28

2'''

27

28

16

27

VIII

27

VIII

13

27

17

28

14

3'''

11

FIG. 8

1'''

11    19    27

29

3'''

14

2'''

12    24   13   20

16    2'''   17

# EUROPÄISCHER RECHERCHENBERICHT

EP 85 11 0063

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-2 072 277 (FLEXITALLIC GASKETS) <br> * Seite 1, Zeilen 22-44; Abbildung * <br><br> --- | 1,4 | F 16 B 43/00 <br> F 16 B 39/24 <br> F 16 J 15/12 |
| A | DE-A-1 450 386 (PARKER-HANNIFIN) <br> * Seite 6, letzter Absatz - Seite 7, erster Absatz; Anspruch 10; Seite 8, zweiter Absatz; Figur 4 * <br><br> --- | 1,13-15 | |
| A | DE-C- 856 815 (DOWTY EQUIPMENT) <br> * Ganzes Dokument * <br><br> --- | 5,7,8, 11 | |
| A | DE-U-8 136 892 (IND. KIRCHHELLEN WIESEHAHN) <br> * Ganzes Dokument * <br><br> --- | 3,5,7 | RECHERCHIERTE SACHGEBIETE (Int. Cl.4) |
| A | PATENT ABSTRACTS OF JAPAN, Band 7, Nr. 106 (M-213)[1251], 10. Mai 1983; & JP - A - 58 28057 (MATSUSHITA SEIKO) 18-02-1983 <br><br> --- | 4 | F 16 B 43/00 <br> F 16 B 39/00 <br> F 16 J 15/00 |
| A | FR-A-2 524 588 (B.O. FRIEBERG) <br> * Anspruch 10; Figur 5 * <br><br> --- | 6 | |
| A | FR-A- 852 739 (P. FARKAS) <br> * Ganzes Dokument * <br><br> --- -/- | 6 | |

Der vorliegende Recherchenbericht wurde für alle Patentansprüche erstellt.

| Recherchenort | Abschlußdatum der Recherche | Prüfer |
|---|---|---|
| BERLIN | 03-12-1985 | GERTIG I. |

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A- 831 874 (JAMES WALKER & CO.) <br> * Ganzes Dokument * | 7 | |
| A | CH-A- 81 021 (P. LECHLER) <br> * Ganzes Dokument * | 13 | |
| A | US-A-2 983 534 (R.M. HELLER) | | |
| A | DE-C- 469 298 (A. MARZLOFF) | | |

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| BERLIN | 03-12-1985 | GERTIG I. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82